# EUROPEAN PATENT APPLICATION

(11) **EP 4 207 835 A1**
(43) Date of publication of application: **05.07.2023**
(21) Application number: 21868624.4
(22) Date of filing: 15.09.2021
(51) Int. Cl.: H04W 4/80

(54) **VEHICLE CONTROL METHOD, MOBILE TERMINAL, VEHICLE-MOUNTED DEVICE AND NETWORK DEVICE**

(30) Priority: 17.09.2020 CN 202010982389
(71) Applicant: Huawei Technologies Co., Ltd., Shenzhen, Guangdong 518129 (CN)
(72) Inventor: LI, Dafeng, Shenzhen, Guangdong 518129 (CN)
(74) Representative: Maiwald GmbH
(86) International application number: PCT/CN2021/118369
(87) International publication number: WO 2022/057802

(57) **Abstract**

This application provides a vehicle control method, a mobile terminal, a vehicle-mounted device, and a network device, including: The mobile terminal establishes a near-field communication connection to the vehicle-mounted device; the mobile terminal receives first information from the network device, activates an application app in response to the first information, and sends a control instruction to the vehicle-mounted device by using the application app. According to technical solutions of this application, a vehicle user can establish a communication connection and control the vehicle in a process in which a vehicle user carries the mobile terminal and approaches the vehicle, so that the user does not need to control a vehicle function by operating an application app on the mobile terminal, thereby improving convenience of using the vehicle.

## Description

### TECHNICAL FIELD

This application relates to the vehicle control field, and in particular, to a vehicle control method, a mobile terminal, a vehicle-mounted device, and a network device.

### BACKGROUND

In recent years, an application scope of a mobile terminal device represented by a smartphone in people's life is continuously expanded, and importance of the mobile terminal device is increasingly high. With the evolution of automobile intelligence and network connection, controlling automobile functions through mobile terminals has become a development trend of the industry and technology.

At present, many automobile manufacturers in the market have begun to provide users with a Bluetooth key function of smartphones. More and more vehicle users tend to use mobile phone digital vehicle keys to control vehicles. A vehicle user only needs to carry a mobile phone, and does not need to carry a conventional vehicle key additionally. And functions such as active unlocking, locking, trunk, and passive entry can be implemented, and a vehicle can be remotely shared with others through authorization.

There are three technical routes for mainstream mobile phone digital vehicle keys in the market: Remote vehicle control is implemented based on wireless communication technologies such as 4G and 5G. This technical route is mature and gradually becomes basic configuration of intelligent connected vehicles. Short-distance vehicle control is implemented based on a Bluetooth low energy (Bluetooth Low Energy, BLE) communication technology. This technical route is developing rapidly. Although some problems still exist, the problems are being resolved gradually. Short-distance vehicle control is implemented based on a near-field communication (Near-field communication, NFC) technology. As a supplement to vehicle control based on wireless communication technologies such as 4G and 5G, this technical route can resolve a problem of vehicle unlocking when a mobile phone is powered off. For the foregoing vehicle control manners, a vehicle user actively unlocks a mobile phone and tap a responding application app (Application) to trigger a control function when a vehicle needs to be controlled. Alternatively, the mobile phone app of the vehicle user continuously runs in a background operating system. When the user carries the mobile phone and approaches the vehicle, a Bluetooth module of the mobile phone establishes a connection to an in-vehicle Bluetooth module, to unlock the vehicle insensibly. However, as Android and Apple mobile phones tighten management of apps running in the background, these apps cannot always run in the background. As a result, a senseless control function of the mobile terminal is invalid when a Bluetooth key of the mobile terminal is close to the vehicle.

It can be learned that, currently a vehicle control method is urgently needed to implement senseless control of the vehicle when the application app used for vehicle control cannot run in the background.

### SUMMARY

Embodiments of this application provide a vehicle control method, a mobile terminal, a vehicle-mounted device, and a network device. When an application app used for vehicle control cannot run in a background, senseless control of a vehicle can still be implemented when a vehicle user carries the mobile terminal and approaches the vehicle, thereby improving convenience of using the vehicle.

According to a first aspect, an embodiment of this application provides a vehicle control method. The method is applied to a mobile terminal, and includes:
establishing a near-field communication connection to a vehicle-mounted device;
receiving first information from a network device;
activating an application app in response to the first information; and
sending a control instruction to the vehicle-mounted device through the app.

According to the technical solution in this embodiment of this application, when an application app used for vehicle control cannot run in a background, a corresponding app may be activated by receiving the first information sent by the network device, and is connected to the vehicle-mounted device and sends a control instruction, to implement senseless control of the vehicle.

With reference to the first aspect, in some possible implementations, the establishing a near-field communication connection to a vehicle-mounted device further includes:
sending second information to the vehicle-mounted device, where the second information indicates first identification information of the mobile terminal.

With reference to the first aspect, in some possible implementations, the control instruction is sent through the near-field communication connection.

According to a second aspect, an embodiment of this application provides a vehicle control method. The method is applied to a vehicle-mounted device, and includes:
establishing a near-field communication connection to a mobile terminal;
sending third information to a network device;
receiving a control instruction from a mobile terminal; and
sending the control instruction to a vehicle-mounted control unit.

According to the technical solution in this embodiment of this application, when an application app used for vehicle control cannot run in a background, the vehicle-mounted device sends the third information to the network device, and the network device further sends first information to the mobile terminal to activate a corresponding app. In this way, senseless control of the vehicle is implemented, and convenience of using the vehicle is improved.

With reference to the second aspect, in some possible implementations, the third information indicates at least one of first identification information of the mobile terminal or second identification information of the vehicle-mounted device.

With reference to the second aspect, in some possible implementations, the establishing a near-field communication connection to a mobile terminal includes:
receiving second information from the mobile terminal, where the second information indicates first identification information of the mobile terminal.

With reference to the second aspect, in some possible implementations, the second information and/or the control instruction is received by using near-field communication established between the vehicle-mounted device and the mobile terminal.

According to a third aspect, an embodiment of this application provides a vehicle control method. The method is applied to a network device, and includes:
receiving third information sent by a vehicle-mounted device; and
sending first information to a mobile terminal, where
the first information is used to activate an application app of the mobile terminal; and
the third information indicates at least one of first identification information of the mobile terminal or second identification information of the vehicle-mounted device.

According to the technical solution in this embodiment of this application, when an application app used for vehicle control cannot run in a background, the network device receives the third information, further sends the first information to the mobile terminal to activate the corresponding app, and sends a control instruction to the vehicle-mounted device through the app, to implement senseless control of the vehicle. In this way, convenience of using the vehicle is improved.

With reference to the third aspect, in some possible implementations, the sending first information to a mobile terminal further includes: determining, by the network device, at least one of the mobile terminal or the app based on the third information.

According to a fourth aspect, an embodiment of this application provides a mobile terminal used for vehicle control, including:
a first near-field communication module, configured to establish a near-field communication connection to a vehicle-mounted device;
a first receiving module, configured to receive first information from a network device; and
a first processing module, configured to activate an application app in respond to the first information, where
the app is configured to send a control instruction to the vehicle-mounted device by using the first near-field communication module.

With reference to the fourth aspect, in some possible implementations, the first near-field communication module is further configured to send second information to the vehicle-mounted device, where the second information indicates first identifier information of a mobile terminal.

With reference to the fourth aspect, in some possible implementations, the first near-field communication module includes at least one of a Bluetooth (Bluetooth) communication module, a ZigBee (ZigBee) communication module, an infrared communication module, an ultra-wideband UWB communication module, a Wi-Fi communication module, or a near-field communication NFC module.

According to a fifth aspect, an embodiment of this application provides a vehicle-mounted device used for vehicle control, including:
a second near-field communication module, configured to establish a near-field communication connection to a mobile terminal, and receive the control instruction from the mobile terminal;
a first sending module, configured to send third information to a network device; and
a second sending module, configured to send the control instruction to an in-vehicle control unit.

With reference to the fifth aspect, in some possible implementations, the second near-field communication module includes at least one of a Bluetooth (Bluetooth) communication module, a ZigBee (ZigBee) communication module, an infrared communication module, and an ultra-wideband UWB communication module, a Wi-Fi communication module, or a near-field communication NFC module.

According to a sixth aspect, an embodiment of this application provides a network device used for vehicle control, including:
a second receiving module, configured to receive third information sent by a vehicle-mounted device; and
a third sending module, configured to send first information to a mobile terminal, where
the first information is used to activate an application app of the mobile terminal; and
the third information indicates at least one of first identification information of the mobile terminal or second identification information of the vehicle-mounted device.

With reference to the sixth aspect, in some possible implementations, the network device further includes a second processing module, configured to determine at least one of the mobile terminal or the app based on the third information.

With reference to the sixth aspect, in some possible implementations, the network device further includes a database module, where the database module stores one or more of an association relationship between the first identification information and the mobile terminal and/or the app, an association relationship between the second identification information and the mobile terminal and/or the app, and an association relationship between the first identification information and the second identification information.

With reference to any one of the foregoing aspects or possible implementations, the first identification information is associated with the mobile terminal.

With reference to any one of the foregoing aspects or possible implementations, the second identification information is associated with the vehicle-mounted device.

With reference to any one of the foregoing aspects or possible implementations, the application app is associated with the first identification information.

With reference to any one of the foregoing aspects or possible implementations, the first identification information is associated with the second identification information.

With reference to any one of the foregoing aspects or possible implementations, the first identification information includes at least one of the following:
an international mobile equipment identity IMEI, an international mobile subscriber identity IMSI, a universally unique identifier UUID, a Wi-Fi MAC address, and a Bluetooth MAC address of the mobile terminal.

With reference to any one of the foregoing aspects or possible implementations, the second identification information includes at least one of the following:
identification information of the vehicle-mounted device;
identification information of a vehicle in which the vehicle-mounted device is located; and
identification information of another vehicle-mounted device associated with the vehicle-mounted device.

With reference to any one of the foregoing aspects or possible implementations, the vehicle control method further includes: sending, by the vehicle-mounted device, the control instruction to the in-vehicle control unit, where the in-vehicle control unit includes one or more of a body control module BCM, a vehicle control unit VCU, a battery management system BMS, a motor control unit MCU, and passive entry/passive start PEPS.

With reference to any one of the foregoing aspects or possible implementations, the control instruction includes one or more of an electronic key authentication instruction, a vehicle door unlocking instruction, an in-vehicle air conditioner turn-on instruction, an in-vehicle charging apparatus unlocking instruction, a vehicle remote control driving instruction, a vehicle window opening instruction, and a trunk opening instruction.

According to a seventh aspect, an embodiment of this application provides a mobile terminal, including a receiver, a transmitter, and a processor, where the receiver and the transmitter are configured to perform the method in the first aspect or the possible implementations under control of the processor.

According to an eighth aspect, an embodiment of this application provides a vehicle-mounted device, including a receiver, a transmitter, and a processor, where the receiver and the transmitter are configured to perform the method in the second aspect or the possible implementations under control of the processor.

According to a ninth aspect, an embodiment of this application provides a vehicle, where the vehicle includes the vehicle-mounted device in the fifth aspect or the possible implementations.

According to a tenth aspect, an embodiment of this application provides a computer-readable storage medium, where the computer-readable storage medium stores a computer program, and when the computer program is executed, the method in the first aspect to the third aspect or the possible implementations is implemented.

According to an eleventh aspect, an embodiment of this application provides an electronic device, including one or more processors, where the one or more processors are coupled to a memory, the memory stores a computer program, and the processor is configured to execute the computer program stored in the memory, to implement the method in the first aspect to the third aspect or the possible implementations.

According to the technical solution in this embodiment of this application, when an application app used for vehicle control cannot run in a background, the mobile terminal receives first information sent by a network device, activates a corresponding app, connects to the vehicle-mounted device, and sends the control instruction. In this way, senseless control of the vehicle is implemented, and convenience of using the vehicle is improved.

### BRIEF DESCRIPTION OF DRAWINGS

FIG. 1 is a schematic diagram of a vehicle control system;
FIG. 2 is a schematic flowchart of a vehicle control method;
FIG. 3 is a schematic flowchart of another vehicle control method;
FIG. 4 is a schematic flowchart of a vehicle control method according to an embodiment of this application;
FIG. 5 is a schematic flowchart of pairing a mobile terminal with a Bluetooth communication module of a vehicle-mounted device according to an embodiment of this application;
FIG. 6 is a schematic diagram of a structure of a mobile terminal used for vehicle control according to an embodiment of this application;
FIG. 7 is a schematic diagram of a structure of a vehicle-mounted device used for vehicle control according to an embodiment of this application; and
FIG. 8 is a schematic diagram of a structure of a network device used for vehicle control according to an embodiment of this application.

### DESCRIPTION OF EMBODIMENTS

The following further describes this application in detail with reference to the drawings and embodiments. It should be understood that the specific embodiments described herein are merely used to explain this application but are not intended to limit this application.

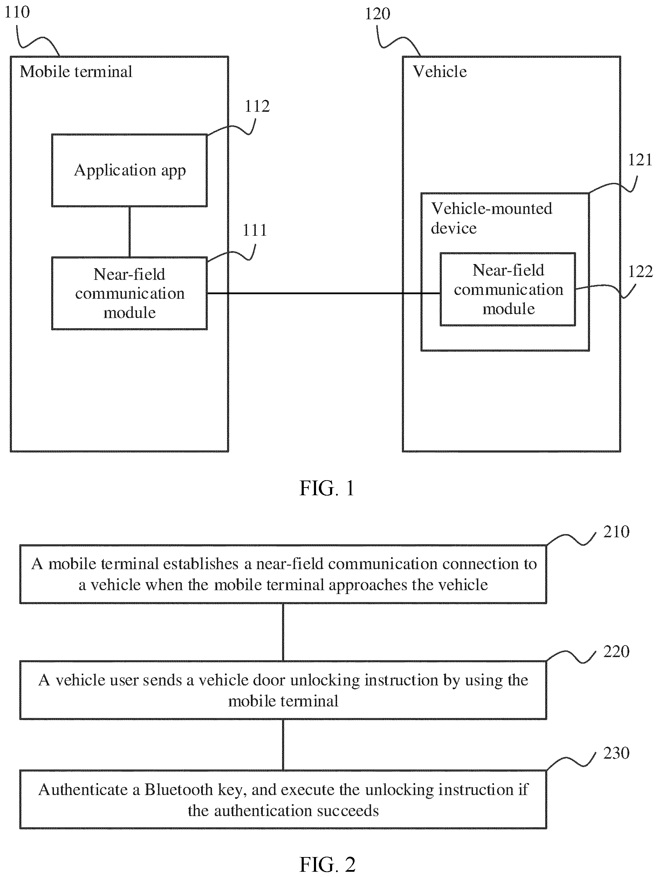

FIG. 1 is a schematic diagram of a vehicle control system. The system includes a mobile terminal 110 and a vehicle 120, and the vehicle 120 includes a vehicle-mounted device 121. The mobile terminal 110 and the vehicle-mounted device 121 each include a near-field communication module 111 and a near-field communication module 122. Near-field communication may be performed between the near-field communication module 111 and the near-field communication module 122, and the application app 112 associated with a vehicle in which the vehicle-mounted device 121 is located is installed on the mobile terminal 110. When the vehicle needs to be controlled, a vehicle user needs to start, on the mobile terminal 110, the app 112 associated with the vehicle, tap a vehicle control instruction, and send the control instruction to the vehicle-mounted device 121 by using the near-field communication module 111 and the near-field communication module 122, and the vehicle control instruction is further executed on an associated vehicle component.

FIG. 2 is a schematic flowchart of a vehicle control method. The following describes a vehicle door unlocking procedure by using an example in which a vehicle-mounted device and a mobile terminal perform short-range communication by using Bluetooth.

Step 210: The mobile terminal establishes a near-field communication connection to a vehicle when the mobile terminal approaches the vehicle.

Specifically, when a Bluetooth module of the mobile terminal has completed pairing with a Bluetooth module of the vehicle-mounted device, in a process in which a vehicle user carries the mobile terminal and approaches the vehicle, the mobile terminal establishes a Bluetooth connection to the vehicle.

Step 220: The vehicle user sends a vehicle door unlocking instruction by using the mobile terminal.

Specifically, the vehicle user needs to start, on the mobile terminal such as a smartphone, an application app associated with the vehicle, and tap a vehicle door unlocking instruction. The unlocking instruction is sent to the vehicle-mounted device.

Step 230: Authenticate a Bluetooth key, and execute an unlock instruction if the authentication succeeds.

For example, when the vehicle user has completed application for the Bluetooth key of the vehicle through the app, the vehicle user sends the vehicle door unlocking instruction by using the mobile terminal. After authenticating the Bluetooth key, the in-vehicle Bluetooth module sends an instruction to a BCM module of the vehicle by using an in-vehicle CAN (Controller Area Network) bus to unlock a door.

According to the foregoing technical solution, the vehicle user needs to take out the smartphone, start the corresponding app, and tap a trigger control instruction to control the vehicle. User experience in this operation manner is poor, and it is cumbersome especially when both hands of the user are occupied. Therefore, there is a need for a senseless control method that can enable the user to automatically connect to the vehicle-mounted device and send the vehicle control instruction when the user carries the mobile terminal and approaches the vehicle.

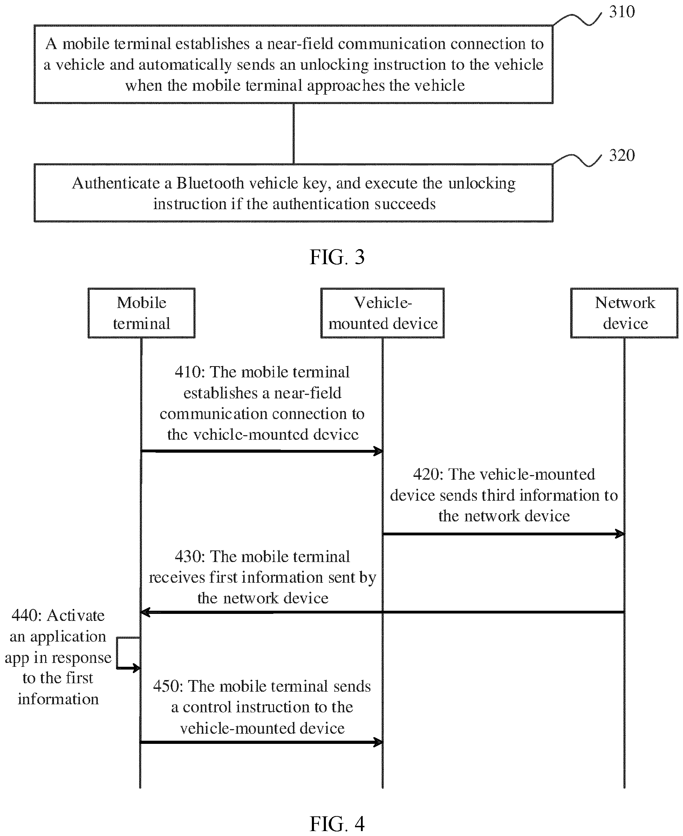

FIG. 3 is a schematic flowchart of another vehicle control method. The method includes the following steps.

Step 310: A mobile terminal establishes a near-field communication connection to a vehicle, and automatically sends an unlocking instruction to the vehicle when the mobile terminal approaches the vehicle.

Step 320: Authenticate a Bluetooth vehicle key, and execute an unlock instruction if the authentication succeeds.

For specific descriptions of step 310 and step 320, refer to the descriptions of step 210 and step 230 in the specific implementation shown in FIG. 2. Details are not further described herein.

For this technical solution, although a user does not need to take out a mobile phone to perform an operation on a vehicle control instruction on an app, to implement that the mobile terminal automatically sends a control instruction to the vehicle, the application app associated with the vehicle keeps running in a background all the time. However, a smartphone manufacturer tightens management on apps running in the background, and these apps are always stopped running in the background. As a result, the mobile terminal cannot automatically send the unlocking instruction to the vehicle to which the connection has been established, and further senseless unlocking of a vehicle door cannot be implemented.

FIG. 4 is a schematic flowchart of a vehicle control method according to an embodiment of this application. The method relates to a mobile terminal, a vehicle-mounted device, and a network device. The following specifically describes the method. The mobile terminal in this application may be any mobile terminal such as a smartphone, a smartwatch, a tablet computer, a personal digital assistant PDA (Personal Digital Assistant), a point of sales POS (Point of sales), an in-vehicle computer, a desktop computer, or a notebook computer. This is not limited in this embodiment of this application.

Step 410: The mobile terminal establishes a near-field communication connection to the vehicle-mounted device.

Specifically, in a process in which a vehicle user carries the mobile terminal and approaches a vehicle, the mobile terminal establishes the near-field communication connection to the vehicle-mounted device. It may be understood that the near-field communication may be one or more of Bluetooth (Bluetooth) communication, ZigBee (ZigBee) communication, infrared communication, Wi-Fi communication, ultra-wideband UWB (Ultra Wide Band) communication, or near-field communication (Near-Field Communication). This is not limited in this embodiment of this application. In a specific implementation of this application, Bluetooth communication is used as an example for specific description.

In an example of the foregoing specific implementation, when the vehicle user carries the mobile terminal, for example, a smartphone, and approaches the vehicle, the smartphone establishes a Bluetooth connection to the vehicle-mounted device. It may be understood that the Bluetooth connection herein is a connection established between the Bluetooth communication module of the smartphone and the in-vehicle Bluetooth communication module. The in-vehicle Bluetooth module may be an independent in-vehicle component, or may be integrated into the vehicle-mounted device. This is not limited in this embodiment of this application.

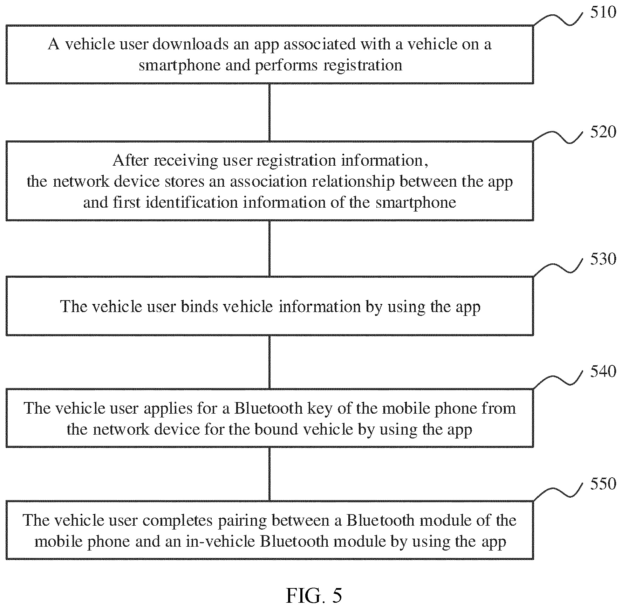

Optionally, when the mobile terminal connects to the vehicle-mounted device for the first time, the vehicle completes pairing between the Bluetooth communication module of the mobile terminal and the Bluetooth communication module of the vehicle-mounted device. For a specific pairing procedure, refer to FIG. 5 and related descriptions below.

In an example of the foregoing specific implementation, when the vehicle user carries the mobile terminal and approaches the vehicle, the mobile terminal may automatically establish a Bluetooth connection to the vehicle-mounted device, and send second information to the vehicle-mounted device by using the Bluetooth module, where the second information indicates first identification information.

It may be understood that the first identification information is associated with the mobile terminal or uniquely indicates the mobile terminal. For example, the first identification information may be an international mobile equipment identity IMEI (International Mobile Equipment Identity), an international mobile subscriber identity IMSI (International Mobile Subscriber Identification Number), a universally unique identifier UUID (Universally Unique Identifier), a Wi-Fi MAC address (Media Access Control Address), a Bluetooth MAC address, or any other information used to uniquely identify the mobile terminal. For example, the first identification information of the mobile phone is generated based on the international mobile equipment identity IMEI of the mobile phone by using an algorithm hash algorithm. This is not limited in this embodiment of this application.

Further, the first identification information may be further associated with an app associated with the vehicle. For example, in a process in which the vehicle user registers the app associated with the vehicle in the mobile terminal, the network device stores the association relationship between the identifier of the mobile terminal and the app. According to the association relationship, after receiving the third information that is sent by the vehicle-mounted device and that is associated with the first identification information, the network device may push the notification message to the app associated with the mobile terminal, to activate the app, and further automatically control the vehicle. It may be understood that the push notification is an active and real-time message push performed on the user interface.

Step 420: The vehicle-mounted device sends third information to the network device.

Specifically, the vehicle-mounted device sends the third information to the network device in a wireless communication manner.

For example, the wireless communication manner may be a short-distance wireless communication manner, or may be a long-distance wireless communication manner, for example, a wireless communication manner based on the 2nd generation mobile communication technology 2G (The 2nd Generation Mobile Communication Technology), the 3rd generation mobile communication technology 3G (The 3rd Generation Mobile Communication Technology), the 4th generation mobile communication technology 4G (The 4th Generation Mobile Communication Technology), the 5th generation mobile communication technology 5G (The 5th Generation Mobile Communication Technology), and/or the 6th generation mobile communication technology 6G (The 6th Generation Mobile Communication Technology). This is not limited in this embodiment of this application.

In an example of the foregoing specific implementation, the vehicle-mounted device may establish a connection to the network device in a 4G wireless communication manner, and send third information, where the third information may be used to indicate first identification information, and the first identification information is associated with the mobile terminal or uniquely indicates the mobile terminal.

In still another example of the foregoing specific implementation, the vehicle-mounted device may establish a connection to the network device in a 5G wireless communication manner, and send third information, where the third information may be used to indicate second identification information, and the second identification information is associated with the vehicle-mounted device or uniquely identifies the vehicle-mounted device.

For example, the second identification information may be one or more of identification information of the vehicle-mounted device, identification information of a vehicle on which the vehicle-mounted device is located, and identification information of another vehicle-mounted device associated with the vehicle-mounted device.

It may be understood that the vehicle-mounted device in the embodiments of this application may be any one or more of a telematics box T-Box (Telematics Box), a mobile data center MDC (Mobile Data Center), and a vehicle integrated unit VIU (Vehicle Integrated Unit). This is not limited in this embodiment of this application.

Further, the second identification information may be associated with the first identification information. Automatic control of the vehicle may be implemented based on the association relationship. For convenience and brevity of description, for specific content of an implementation of the technical solution in this embodiment, refer to the description in the foregoing part. Details are not described herein again.

Step 430: The mobile terminal receives first information sent by the network device.

Specifically, the mobile terminal establishes a wireless communication connection to the network device, and receives, in the wireless communication manner, the first information sent by the network device.

In an example of the foregoing specific implementation, the network device further includes a database module. The database module may store an association relationship among the first identification information, the second identification information, the mobile terminal, the vehicle-mounted device, and the application app. For example, the database module stores one or more of an association relationship between the first identification information and the mobile terminal and/or the app, an association relationship between the second identification information and the mobile terminal and/or the app, and an association relationship between the first identification information and the second identification information.

Further, the network device may further include a second processing module. The second processing module may determine, based on the foregoing association relationship stored in the database module, an app associated with the identification information indicated by the third information. For example, the second processing module determines, based on the first identification information indicated by the third information, an app associated with the first identification information. Alternatively, the second processing module determines, based on the second identification information indicated by the third information and the association relationship between the first identification information and the second identification information, an app associated with the first identification information, and sends the first information to the associated mobile terminal.

Step 440: Activate the application app in response to the first information.

In an example of the foregoing specific implementation, the mobile terminal is configured, and the app on the mobile terminal carried by the vehicle user is automatically activated in an application whitelist manner based on a message type. For example, the first information may be a push (push) notification type or other types of information. This is not limited in this application.

Step 450: The mobile terminal sends a control instruction to the vehicle-mounted device.

Specifically, the app of the mobile terminal sends the control instruction to the vehicle-mounted device by using the near-field communication connection.

For example, the control instruction may include one or more of an electronic key authentication instruction, and a vehicle door unlocking instruction, an in-vehicle air conditioner turn-on instruction, an in-vehicle charging apparatus unlocking instruction, a vehicle remote control driving instruction, a vehicle window opening instruction, and a trunk opening instruction, and specific type of the control instruction is not limited in this embodiment of this application.

In an example of the foregoing specific implementation, the vehicle user sends a mobile phone Bluetooth key authentication instruction and a vehicle door unlocking instruction to the in-vehicle Bluetooth module through the app associated with the vehicle on the smartphone. The in-vehicle Bluetooth module receives Bluetooth key authentication data and the vehicle door unlocking instruction of the mobile phone, and authenticates the Bluetooth key of the mobile phone.

Further, after the Bluetooth key of the mobile phone passes the authentication, the mobile phone may send a control instruction to the corresponding in-vehicle control unit by using the in-vehicle communication network.

For example, after the Bluetooth key of the mobile phone passes the authentication, the mobile phone sends the vehicle door unlocking instruction to the body control module BCM (Body Control Module) through a controller area network CAN bus.

It may be understood that the in-vehicle control unit may include one or more of a body control module BCM, a vehicle control unit VCU (Vehicle Control Unit), a battery management system BMS (Battery Management System), a motor control unit MCU (Motor Control Unit), and passive entry/passive start PEPS (Passive Entry/Passive Start). A specific type of the in-vehicle control unit is not limited in this embodiment of this application.

FIG. 5 is a procedure of pairing a mobile terminal with a Bluetooth communication module of a vehicle-mounted device according to an embodiment of this application.

For convenience, in the embodiments of this application, an example in which the mobile terminal is a smartphone is used for description. It may be understood that the mobile terminal may alternatively be another terminal device described above. This is not limited.

Step 510: A vehicle user downloads an app associated with the vehicle on a smartphone and performs registration.

Step 520: After receiving user registration information, a network device stores an association relationship between the app and first identification information of the smartphone.

Optionally, when the vehicle user changes the mobile phone, information is automatically sent to remind the user to update mobile phone identification information.

Step 530: The vehicle user binds vehicle information through the app.

For example, the bound vehicle information may be a vehicle identification code VIN (Vehicle Identity Number) stored by the vehicle user in the app, or other identification information that can uniquely indicate the vehicle. This is not limited in this embodiment of this application.

Step 540: The vehicle user applies for a Bluetooth key of the mobile phone from the network device for the bound vehicle through the app.

For example, the Bluetooth key of the mobile phone may be a segment of ciphertext that includes at least one of unique identification information of the vehicle or vehicle control permission data and that is protected by using a security encryption algorithm. This is not limited in this embodiment of this application.

Step 550: The vehicle user completes pairing between the Bluetooth module of the mobile phone and the in-vehicle Bluetooth module through the app.

Optionally, after the Bluetooth module of the mobile phone is successfully paired with the in-vehicle Bluetooth module, the in-vehicle Bluetooth module sends pairing success information to the mobile phone app associated with the vehicle.

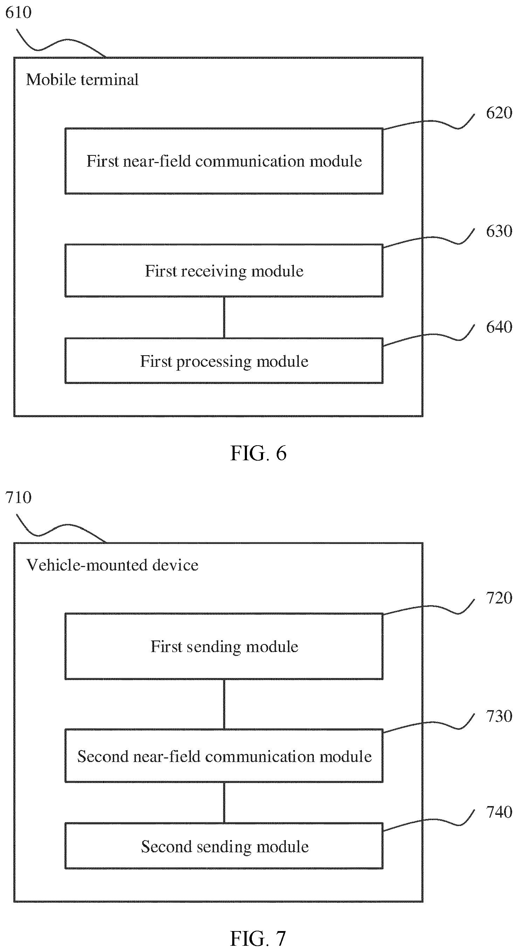

FIG. 6 is a schematic diagram of a structure of a mobile terminal used for vehicle control according to an embodiment of this application. The mobile terminal 610 includes a first near-field communication module 620, a first receiving module 630, and a first processing module 640, and is configured to perform the vehicle control method shown in FIG. 4.

The first near-field communication module 620 is configured to establish a near-field communication connection to a vehicle-mounted device 710.

The first receiving module 630 is configured to receive first information from a network device 810.

The first processing module 640 is configured to activate an application app in response to the first information.

The app is configured to send a control instruction to the vehicle-mounted device 710 by using the first near-field communication module 620.

For convenience and brevity of description, for specific descriptions in this embodiment, refer to the descriptions in the method embodiment corresponding to FIG. 4. Details are not described herein again.

FIG. 7 is a schematic diagram of a structure of vehicle-mounted device used for vehicle control according to an embodiment of this application. The vehicle-mounted device 710 includes a second near-field communication module 730, a first sending module 720, and a second sending module 740, and is configured to perform the vehicle control method shown in FIG. 4.

The second near-field communication module 730 is configured to establish a near-field communication connection with the mobile terminal 610, and receive a control instruction from the mobile terminal 610.

The first sending module 720 is configured to send third information to a network device 810.

The second sending module 740 is configured to send the control instruction to an in-vehicle control unit.

For convenience and brevity of description, for specific descriptions in this embodiment, refer to the descriptions in the method embodiment corresponding to FIG. 4. Details are not described herein again.

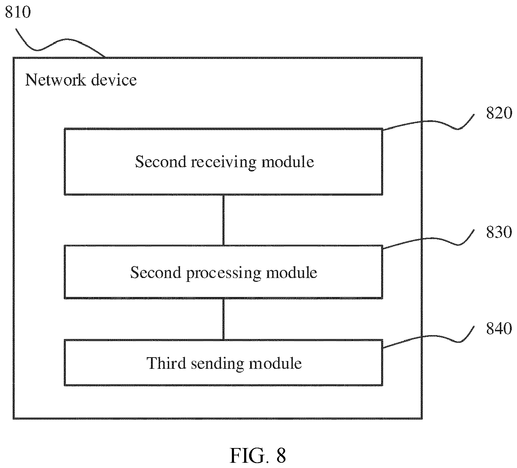

FIG. 8 is a schematic diagram of a structure of a network device used for vehicle control according to an embodiment of this application. The network device 810 includes a second receiving module 820, a second processing module 830, and a third sending module 840, configured to perform the vehicle control method shown in FIG. 4.

The second receiving module 820 is configured to receive third information sent by the vehicle-mounted device 710, where the third information indicates at least one of first identification information of the mobile terminal 610 or second identification information of the vehicle-mounted device 710.

The second processing module 830 is configured to determine at least one of the mobile terminal 610 or the application app based on the third information.

The third sending module 840 is configured to send first information to the mobile terminal 610, where the first information is used to activate an application app of the mobile terminal 610.

For convenience and brevity of description, for specific descriptions in this embodiment, refer to the descriptions in the method embodiment corresponding to FIG. 4. Details are not described herein again.

A mobile terminal provided in an embodiment of this application includes a receiver, a transmitter, and a processor. Under control of the processor, the receiver and the transmitter are configured to perform the method provided in the embodiment shown in FIG. 4 of this application.

A vehicle-mounted device provided in an embodiment of this application includes a receiver, a transmitter, and a processor. Under control of the processor, the receiver and the transmitter are configured to perform the method provided in the embodiment shown in FIG. 4 of this application.

An embodiment of this application provides a computer-readable storage medium. The computer-readable storage medium stores a computer program. When the computer program is executed by a processor, the method provided in the embodiment shown in FIG. 4 of this application is implemented.

An electronic device provided in an embodiment of this application includes one or more processors. The processor is configured to execute a computer program stored in a memory, to implement the method provided in the embodiment shown in FIG. 4 of this application.

Optionally, the processor is coupled to a memory.

Optionally, the electronic device may further include the foregoing memory, and the memory stores a computer program.

An embodiment of this application provides a vehicle. The vehicle includes the vehicle-mounted device provided in the embodiment shown in FIG. 8 of this application.

It should be noted that in the foregoing embodiments, an example in which Bluetooth communication is used as short-range communication and the vehicle door unlocking instruction is used as the vehicle control instruction is used for description, but does not constitute a limitation on this application. The foregoing solutions may also be applicable to other short-range communication manners and vehicle control instruction solutions, a specific short range communication manner and a specific vehicle control instruction are not limited in this application.

Terms used in the specific implementations of the embodiments of this application are merely used to explain the specific implementations of this application, but are not intended to limit the embodiments of this application.

It should be noted that, to clearly describe the technical solutions in the embodiments of this application, words such as "first" and "second" in the embodiments of this application are used to distinguish between same items or similar items whose functions and functions are basically the same, for example, the first information and the second information is merely used to distinguish between different information. Unless otherwise specified and limited, a sequence of the first information and the second information is not limited, and cannot be understood as an indication or implication. A person skilled in the art may understand that words such as "first" and "second" do not limit a quantity and an execution sequence.

"Vehicle" or another similar term in the embodiments of this application includes a general motor vehicle, for example, a car, an SUV, an MPV, a bus, a truck, and another cargo or passenger vehicle, and a water transportation tool including various ships and boats, and aircraft, and includes hybrid vehicles, electric vehicles, fuel vehicles, plug-in hybrid vehicles, fuel cell vehicles, and other substitute fuel vehicles. The hybrid vehicle is a vehicle having two or more power sources, and the electric vehicle includes a pure electric vehicle, an enhanced electric vehicle, and the like. This is not specifically limited in this application.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or a communication medium including any medium (for example, according to a communication protocol) that facilitates transfer of a computer program from one place to another place. In this manner, the computer-readable medium generally may correspond to: (1) tangible computer-readable storage media which is non-transitory, or (2) a communication medium such as a signal or a carrier wave. The data storage medium may be any available media that can be accessed by one or more computers or one or more processors to retrieve an instruction, code and/or data structures for implementation of the techniques described in this application. A computer program product may include a computer-readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store program code in a form of instruction or data structures and that can be accessed by a computer. Also, any connection is properly referred to as a computer-readable medium. For example, if the instruction is transmitted from a website, a server, or another remote source through a coaxial cable, an optical fiber, a twisted pair, a digital subscriber line (DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that computer-readable storage media and data storage media do not include connections, carrier waves, signals, or other transitory media, but are instead directed to non-transitory, tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using lasers. Combinations of the above should also be included within the scope of computer-readable media.

The instruction may be performed by one or more processors such as one or more digital signal processors (DSP), a general-purpose microprocessor, an application-specific integrated circuit (ASIC), a field programmable gate array (FPGA), or another equivalent integrated or discrete logic circuit. Therefore, the term "processor" used in this specification may refer to the foregoing structure, or any other structure suitable for implementation of the technologies described in this specification. In addition, in some aspects, techniques may be fully implemented in one or more circuits or logic elements.

The technologies in this application may be implemented in various apparatuses or devices, including a vehicle-mounted device, an integrated circuit (IC), or a set of ICs (for example, a chip set). Various components or modules are described in this application to emphasize functional aspects of an apparatus configured to perform the disclosed techniques, but do not necessarily require realization by different hardware units. Actually, as described above, various modules may be combined in hardware in combination with appropriate software and/or firmware, or provided by interoperable hardware (including one or more processors described above).

In the foregoing embodiments, the descriptions in each embodiment have respective focuses. For a part that is not described in detail in an embodiment, refer to related descriptions in other embodiments.

The foregoing descriptions are merely specific implementations of this application. Any variation or replacement readily figured out by a person skilled in the art within the scope disclosed in this application shall fall within the protection scope of this application. The protection scope of this application shall be subject to the protection scope of the claims.

## Claims

1. A vehicle control method, applied to a mobile terminal, and comprising:
establishing a near-field communication connection to a vehicle-mounted device;
receiving first information from a network device;
activating an application app in response to the first information; and
sending a control instruction to the vehicle-mounted device through the app.

2. The method according to claim 1, wherein the establishing a near-field communication connection to a vehicle-mounted device comprises:
sending second information to the vehicle-mounted device, wherein the second information indicates first identification information of the mobile terminal.

3. The method according to claim 1 or 2, wherein the app is associated with the first identification information.

4. The method according to any one of claims 1 to 3, wherein the first identification information comprises one or more of an international mobile equipment identity IMEI, an international mobile subscriber identity IMSI, a universally unique identifier UUID, a Wi-Fi MAC address, and a Bluetooth MAC address of the mobile terminal.

5. The method according to any one of claims 1 to 4, wherein the first identification information is associated with second identification information of the vehicle-mounted device.

6. The method according to any one of claims 1 to 5, wherein the second identification information comprises at least one of the following:
identification information of the vehicle-mounted device;
identification information of a vehicle in which the vehicle-mounted device is located; and
identification information of another vehicle-mounted device associated with the vehicle-mounted device.

7. The method according to any one of claims 1 to 6, wherein the control instruction comprises one or more of an electronic key authentication instruction, a vehicle door unlocking instruction, an in-vehicle air conditioner turn-on instruction, an in-vehicle charging apparatus unlocking instruction, a vehicle remote control driving instruction, a vehicle window opening instruction, and a trunk opening instruction.

8. The method according to any one of claims 1 to 7, wherein the sending a control instruction to the vehicle-mounted device comprises:
sending the control instruction through the near-field communication connection.

9. The method according to any one of claims 1 to 8, wherein the near-field communication comprises at least one of Bluetooth communication, ZigBee communication, infrared communication, ultra-wideband UWB communication, Wi-Fi communication, or near-field communication NFC.

10. The method according to any one of claims 1 to 9, wherein the method further comprises:
sending, by the vehicle-mounted device, the control instruction to an in-vehicle control unit, wherein the in-vehicle control unit comprises one or more of a body control module BCM, a vehicle control unit VCU, a battery management system BMS, a motor control unit MCU, and passive entry/passive start PEPS.

11. A vehicle control method, applied to a vehicle-mounted device and comprising:
establishing a near-field communication connection to a mobile terminal;
sending third information to a network device;
receiving a control instruction from the mobile terminal; and
sending the control instruction to an in-vehicle control unit.

12. The method according to claim 11, wherein the third information indicates at least one of first identification information of the mobile terminal or second identification information of the vehicle-mounted device.

13. The method according to claim 11 or 12, wherein the first identification information is associated with the second identification information.

14. The method according to any one of claims 11 to 13, wherein the first identification information comprises one or more of an international mobile equipment identity IMEI, an international mobile subscriber identity IMSI, a universally unique identifier UUID, a Wi-Fi MAC address, and a Bluetooth MAC address of the mobile terminal.

15. The method according to any one of claims 11 to 14, wherein the second identification information comprises at least one of the following:
identification information of the vehicle-mounted device;
identification information of a vehicle in which the vehicle-mounted device is located; and
identification information of another vehicle-mounted device associated with the vehicle-mounted device.

16. The method according to any one of claims 11 to 15, wherein the establishing a near-field communication connection to a mobile terminal comprises:
receiving second information from the mobile terminal, wherein the second information indicates the first identification information.

17. The method according to any one of claims 11 to 16, wherein the second information and/or the control instruction is received through the near-field communication established between the vehicle-mounted device and the mobile terminal.

18. The method according to any one of claims 11 to 17, wherein the in-vehicle control unit comprises one or more of a body control module BCM, a vehicle control unit VCU, a battery management system BMS, a motor control unit MCU, and passive entry/passive start PEPS.

19. The method according to any one of claims 11 to 18, wherein the control instruction comprises one or more of an electronic key authentication instruction, a vehicle door unlocking instruction, an in-vehicle air conditioner turn-on instruction, an in-vehicle charging apparatus unlocking instruction, a vehicle remote control driving instruction, a vehicle window opening instruction, and a trunk opening instruction.

20. A vehicle control method, applied to a network device, and comprising:
receiving third information sent by a vehicle-mounted device; and
sending first information to a mobile terminal, wherein
the first information is used to activate an application app of the mobile terminal; and
the third information indicates at least one of first identification information of the mobile terminal or second identification information of the vehicle-mounted device.

21. The method according to claim 20, wherein the sending first information to a mobile terminal comprises: determining, by the network device, at least one of the mobile terminal or the app based on the third information.

22. A mobile terminal used for vehicle control, comprising:
a first near-field communication module, configured to establish a near-field communication connection to a vehicle-mounted device;
a first receiving module, configured to receive first information from a network device; and
a first processing module, configured to activate an application app in respond to the first information, wherein
the app is configured to send a control instruction to the vehicle-mounted device by using the first near-field communication module.

23. The mobile terminal according to claim 22, wherein the first near-field communication module is further configured to send second information to the vehicle-mounted device, wherein the second information indicates first identifier information of the mobile terminal.

24. The mobile terminal according to claim 22 or 23, wherein the first near-field communication module comprises at least one of a Bluetooth communication module, a ZigBee communication module, an infrared communication module, an ultra-wideband UWB communication module, a Wi-Fi communication module, or a near-field communication NFC module.

25. A vehicle-mounted device used for vehicle control, comprising:
a second near-field communication module, configured to establish a near-field communication connection with a mobile terminal, and receive a control instruction from the mobile terminal;
a first sending module, configured to send third information to a network device; and
a second sending module, configured to send the control instruction to an in-vehicle control unit.

26. The vehicle-mounted device according to claim 25, wherein the third information indicates at least one of first identification information of the mobile terminal or second identification information of the vehicle-mounted device.

27. The vehicle-mounted device according to claim 25 or 26, wherein the second near-field communication module comprises at least one of a Bluetooth communication module, a ZigBee communication module, an infrared communication module, an ultra-wideband UWB communication module, a Wi-Fi communication module, or a near-field communication NFC module.

28. The vehicle-mounted device according to any one of claims 25 to 27, wherein the in-vehicle control unit comprises one or more of a body control module BCM, a vehicle control unit VCU, a battery management system BMS, a motor control unit MCU, and passive entry/passive start PEPS.

29. A network device used for vehicle control, comprising:
a second receiving module, configured to receive third information sent by a vehicle-mounted device; and
a third sending module, configured to send first information to a mobile terminal, wherein
the first information is used to activate an application app of the mobile terminal, and the third information indicates at least one of first identification information of the mobile terminal or second identification information of the vehicle-mounted device.

30. The network device according to claim 29, wherein the network device further comprises a second processing module, configured to determine at least one of the mobile terminal or the app based on the third information.

31. The network device according to claim 29 or 30, wherein the network device further comprises a database module, wherein the database module stores one or more of an association relationship between the first identification information and the mobile terminal and/or the app, an association relationship between the second identification information and the mobile terminal and/or the app, and an association relationship between the first identification information and the second identification information.

32. A mobile terminal, comprising a receiver, a transmitter, and a processor, wherein the receiver and the transmitter are configured to perform the method according to any one of claims 1 to 10 under control of the processor.

33. A vehicle-mounted device, comprising a receiver, a transmitter, and a processor, wherein the receiver and the transmitter are configured to perform the method according to any one of claims 11 to 19 under control of the processor.

34. A vehicle, wherein the vehicle comprises the vehicle-mounted device according to any one of claims 25 to 28.

35. A computer-readable storage medium, wherein the computer-readable storage medium stores a computer program, and when the computer program is executed by a processor, the method according to any one of claims 1 to 19 is implemented.

36. An electronic device, comprising one or more processors, wherein the one or more processors are coupled to a memory, the memory stores a computer program, and the processor is configured to execute the computer program stored in the memory, to implement the method according to any one of claims 1 to 19.
